# EUROPÄISCHE PATENTSCHRIFT

(11) **EP 1 170 342 B1**
(45) Veröffentlichungstag und Bekanntmachung des Hinweises auf die Patenterteilung: **28.06.2006**
(21) Anmeldenummer: 01116219.5
(22) Anmeldetag: 04.07.2001
(51) Int. Cl.: C09D 175/06, C09D 175/16, C09D 175/14, C09D 163/10

(54) **Lösemittelhaltige UV-strahlenhärtende Beschichtungsstoffe**
Solvent containing UV curable coating compositions
Compositions de revêtement durcissables aux rayons UV contenant un solvant

(30) Priorität: 05.07.2000 DE 10032695
(43) Veröffentlichungstag der Anmeldung: 09.01.2002
(73) Patentinhaber: Remmers Baustofftechnik GmbH, 49624 Löningen (DE)
(72) Erfinder: Goletz, Peter, 49688 Lastrup (DE)
(74) Vertreter: GROSSE BOCKHORNI SCHUMACHER

(56) Entgegenhaltungen:
- EP-A- 0 728 784
- EP-A- 0 888 885
- WO-A-92/17337
- DE-A- 19 535 934
- DE-A- 19 732 621
- US-A- 4 143 013
- US-A- 5 977 200
- US-A- 5 990 192
- US-A- 6 054 502
- DATABASE WPI Section Ch, Week 199901 Derwent Publications Ltd., London, GB; Class A14, AN 1999-005451 XP002180980 & JP 10 279884 A (NIKKO KAGAKU KENKYUSHO KK), 20. Oktober 1998 (1998-10-20)

## Beschreibung

Die vorliegende Erfindung betrifft lösemittelhaltige UV-strahlenhärtende Beschichtungsstoffe, ein Verfahren zur Herstellung und deren Verwendung.

Gegenwärtige Beschichtungsstoffe und -mischungen zeichnen sich durch zeitlich begrenzte Haltbarkeit gegenüber exogenen Einflüssen, zum Beispiel den Wettereinflüssen auf behandeltem Holz, aus. Ihre Lebensdauer überschreitet selten einen Zeitraum von 4 bis 5 Jahren, was Untersuchungen aus den letzten 40 Jahren gezeigt haben. Eines der Hauptprobleme der auf dem Markt befindlichen Beschichtungsmaterialien in pigmentierter und unpigmentierter Zubereitung liegt in der Erzielung einer Haltbarkeit von über 8 Jahren. Gegenwärtig müssen sehr kurze Renovierungs- und Pflegeintervalle der beschichteten Oberflächen, im speziellen von Holzflächen hingenommen werden.

Bei der Härtung von Lacken mit UV-Licht gewinnen wäßrige Dispersionen immer mehr an Bedeutung. Ihr Marktanteil hat sich in den letzten 15 Jahren bei den strahlenhärtenden Lacken nahezu verdoppelt (R. Mehnert, A. Pincus, et al UV & EB Curing Technology &Equipment, Vol. 1 Wiley-SITA, London, 1998). Für die Verwendung von Wasser anstelle von organischen Lösemitteln oder Reaktionsverdünnern sprechen nicht nur ökologische Gründe und Aspekte des Arbeitsschutzes, sondern in zunehmenden Maße auch wirtschaftliche Gründe, da zum Beispiel die Kosten für die Entsorgung und das Recycling der Lösemittel entfallen. Wäßrige aliphatische Polyurethanacrylate eignen sich für die Beschichtung von Substraten, die einer Außenbewitterung ausgesetzt sind. Unter diesen Bedingungen ist vor allem der Gehalt an Restdoppelbindungen in den UV-gehärteten Lacken von Bedeutung, da die nicht umgesetzten Doppelbindungen für den Abbau der Lackschicht, zum Beispiel durch die Bestrahlung mit Sonnenlicht verantwortlich sind. Aus diesem Grund sollte der Doppelbindungsumsatz bei der UV-Bestrahlung von getrockneten wäßrigen Dispersionen auf Polymerbasis möglichst hoch sein.

Zur Zeit werden in Beschichtungsmischungen für Holzflächen unterschiedliche Systeme verwendet. Hierbei handelt es sich einerseits um reine organisch-lösemittelbasierte Beschichtungsstoffe, wie zum Beispiel Alkydharze und andererseits um Acrylharze oder PE/U-Harze. Die Acrylharze lassen sich noch weiter unterteilen in wässerige Acrylate, wässerige Polyurethan/Acrylat-Gemische, polyurethanisierte Acrylate, Hybride (Mischpolymerisate/ Gemische aus z.B. Acrylaten/PU und Alkydharzen, Emulsionsalkyde usw.) in Wasser. Des weiteren zählen auch die wasserverdünnbaren bzw. wasserlösliche Alkyde hierzu.

Die Haltbarkeit gegenüber Wettereinflüssen der oben genannten Beschichtungsstoffklassen zeichnet sich, mit Ausnahme der organisch-lösemittelbasierten Beschichtungsstoffe, durch eine relativ genau zu definierende Lebensdauer aus. Diese Lebensdauer beträgt, dies ist aus der Praxis der letzten 40 Jahre bekannt, 4-5 Jahre. Des weiteren stoßen speziell die chemischen Holzschutzmittel bei den Verbrauchern aufgrund des gesteigerten Umweltbewußtseins auf zunehmende Ablehnung.

Der Grund der eingeschränkten Haltbarkeit liegt in der zeitlich begrenzten Lebenserwartung der polymeren Strukturen der Bindemittel. Die "natürliche" Lebenserwartung polymerer Strukturen unter exogenen Einwirkungen der Umwelt wird zeitlich durch die begrenzte Stabilität der zweidimensionalen Kohlenstoff - Kohlenstoff Kettenverbindungen definiert. Die Spaltung innerhalb der Kohlenstoff-Kohlenstoff-Polymerketten setzt bereits sehr früh ein. Sie erreicht innerhalb eines Zeitraumes von 4 - 5 Jahren eine Größe die einen irreversiblen Abbau initiiert. Dieser Abbau entzieht sich völlig den üblichen Steuerungsmechanismen. Additive mit inhibierender Wirkung sollen die Abbauraten innerhalb der Polymerketten senken. Diese Erkenntnis ist nicht neu. Sie wurde bereits Anfang der 60-iger Jahre eingehend untersucht und publiziert (siehe Prof. Dr. M. B. Nejman, "Alterung und Stabilisierung von Polymeren", Verlag "NAUKA", Moskau 1964, Seite 347 - 360 und Tobolsky, A. V., "Properties and structure of polymeres", New York/ London 1960, Seite 223.)

Konstruktive oder bauliche Maßnahmen, die zum Beispiel der Minderung der Befeuchtung und der holzzerstörenden UV-Strahlung dienen, lassen sich vielfach nicht verwirklichen, so daß die Haltbarkeit dieser Konstruktion wesentlich durch das Beschichtungssystem bestimmt wird.

Die DE 197 32 621 offenbart die Verwendung von strahlungshärtbaren Zubereitungen für die Beschichtung von mineralischen Formkörpern. Hierbei werden auch Zubereitungen offenbart, die mindestens ein UV-vernetzbares aliphatisches Polymer oder Copolymerisat oder Mischungen davon, Füllstoffe, Photoinitiatoren, anorganische und/oder organische Lösemittel, Nanometalloxide sowie gegebenenfalls weitere Zusatzstoffe enthalten. Jedoch bezieht sich die DE 197 32 621 nicht auf den Schutz von Holz; zudem wird die Partikelgröße der Nanometalloxide nicht offenbart.

Bekannt ist aus dem Stand der Technik (siehe A. Tauber, T. Scherzer, R. Mehnert, Veröffentlichung vom Institut für Oberflächenmodifizierung (IOM), Leipzig, "UV-Vernetzung von wäßrigen Polyurethanacrylat-Dispersionen, Untersuchung mittels Real-Time-FTIR-Spektroskopie und unter praxisnahen Bedingungen." Symposiumband: 10 UCB-Radcure Symposium vom 9.-10. Spt. 1999 in Bremen; Exploring the Science, Technology and Applications of U.V. and E.B. Curing, Hrsg. R.S. Davidson, SITA Technology Ltd. London 1999 sowie D. Distler (Hrsg.), Wäßrige Polymerdispersionen, Wiley-VCH, Weinheim 1999), daß Polymere einen Doppelbindungsumsatz von 67 % aufweisen, der aber erst bei Temperaturen von 90 °C und höher erreicht wird. Bei den bekannten Beschichtungsstoffen fehlt es bis jetzt an der Langzeithaftung unter Beibehaltung der Dauerelastizität. Zusätzlich weisen die Verbindungen nach dem jetzigen Stand der Technik umweltbelastende Eigenschaften sowohl während der Herstellung, der Verarbeitung, dem Gebrauch als auch bei der Entsorgung auf. Es gibt zur Zeit auch keine Möglichkeiten die sogenannten Restemissionen für den Einsatz im Innenbereich zu minimieren.

Aufgabe der vorliegenden Erfindung ist es gewesen, lösemittelhaltige UV-strahlenhärtende Beschichtungsstoffe zur Verfügung zu stellen, die die vorgenannten Nachteile des jetzigen Standes der Technik nicht aufweisen.

Die Aufgabe wird durch die erfindungsgemäßen lösemittelhaltige UV-strahlenhärtenden Beschichtungsstoffe enthaltend mindestens ein UV-vernetzbares aliphatisches Polymer oder Copolymerisat oder Mischungen davon mit einem Molgewicht von 600 bis 50 000, Füllstoffe, Photoinitiatoren, anorganische und organische Lösemittel, Nanometalloxide mit einer Partikelgröße von 5 nm bis 400 nm und gegebenenfalls weitere Zusatzstoffe.

Überraschenderweise zeigten die erfindungsgemäßen Beschichtungsstoffe eine erhebliche Verbesserung der Langzeithaftung unter Beibehaltung der Dauerelastizität durch Einbau xylophiler Polymerstrukturen. Auch die umweltbelastenden Eigenschaften der Beschichtungsstoffe sowohl während der Herstellung, der Verarbeitung, dem Gebrauch als auch bei der Entsorgung sind überraschenderweise geringer als sie aus dem Stand der Technik bekannt sind. Zusätzlich ist die Beibehaltung eines einfachen Produkthandlings bei den üblichen Verarbeitungsprozessen wie zum Beispiel beim Tauchen, Fluten, Gießen, Walzen und Spritzen anzuführen. Die Produktverarbeitung ist sowohl industriell als auch handwerklich ausgerichtet. Die Minimierung der Investitionskosten beim Produktverarbeiter ist durch den Einsatz einfacher Anwendungen der Verarbeitungstechnologie gegeben sowie die markante Verschiebung der Wartungsintervalle von derzeit 2 - 3 Jahre auf 8 -Jahre. Mit den erfindungsgemäßen Beschichtungsstoffen behandelte Produkte zeichnen sich durch außerordentlich langjährige Haltbarkeit aus und zwar auch beim Einsatz im Außenbereich.

In einer weiteren Ausführungsform besteht der lösemittelhaltige UV-strahlenhärtende Beschichtungsstoff aus einem UV-vernetzbaren aliphatischen Polymer oder Copolymerisat mit einem Molgewicht von 600 bis 30000 aus der Gruppe bestehend aus Urethanacrylaten, UV-vernetzbaren aliphatischen Polyester-Polyurethan-Copolymerisaten, UV-vernetzbaren aliphatischen Polyurethan-Acrylsäureester-Copolymerisaten oder Mischungen davon.

In einer weiteren Ausführungsform besteht der lösemittelhaltige UV-strahlenhärtende Beschichtungsstoff aus einem UV-vernetzbaren aliphatischen Urethanacrylaten, mit einem Molgewicht von 600 bis 50 000, bevorzugt mit einem Molgewicht von 2000 bis 40 000 und einem Acrylat-/Urethananteil von 95 : 5 bis 50 : 50.

In einer bevorzugten Ausführungsform besteht der lösemittelhaltige UV-strahlenhärtende Beschichtungsstoff aus einem UV-vernetzbaren aliphatischen Urethanacrylaten, bevorzugt mit einem Molgewicht von 2000 bis 40 000 und einem Acrylat-/Urethananteil von 60 : 40 bis 75 : 25.

In einer weiteren Ausführungsform besteht der lösemittelhaltige UV-strahlenhärtende Beschichtungsstoff aus einem UV-vernetzbaren aliphatischen Polyester-Polyurethan-Copolymerisaten bevorzugt mit einem Molgewicht von 600 bis 50 000, bevorzugt mit einem Molgewicht von 2000 bis 40 000 und einem Polyester-/Polyurethananteil von 95 : 5 bis 50 : 50.

In einer bevorzugten Ausführungsform besteht der lösemittelhaltige UV-strahlenhärtende Beschichtungsstoff aus einem UV-vernetzbaren aliphatischen Polyester-Polyurethan-Copolymerisaten vorzugsweise mit einem Molgewicht von 2000 bis 40 000 und einem Polyester-/Polyurethananteil von 60 : 40 bis 75 : 25 und /oder eines Gemisches bestehend aus 1 Gewichtsteil eines UV-vernetzbaren aliphatischen Polyester-Polyurethan-Copolymerisaten und 1 Gewichtsteil eines UV-vernetzbaren aliphatischen Polyurethan-Acrylsäureester-Copolymerisates.

In einer weiteren Ausführungsform besteht der lösemittelhaltige UV-strahlenhärtende Beschichtungsstoff aus einem UV-vernetzbaren aliphatischen Polyurethan und Acrylsäureester-Copolymerisaten, mit einem Molgewicht von 600 bis 50 000, bevorzugt mit einem Molgewicht von 2000 bis 40 000, und einem Acrylsäureester-/Polyurethananteil von 95 : 5 bis 50 : 50.

In einer bevorzugten Ausführungsform besteht der lösemittelhaltige UV-strahlenhärtende Beschichtungsstoff aus einem UV-vernetzbaren aliphatischen Polyurethan und Acrylsäureester-Copolymerisaten, bevorzugt mit einem Molgewicht von 2000 bis 40 000 und einem Acrylat-/Urethananteil von 60 : 40 bis 75 : 25.

In einer weiteren Ausführungsform besteht der lösemittelhaltiger UV-strahlenhärtender Beschichtungsstoff aus einem UV-vernetzbaren cycloaliphatischen Epoxyacrylat mit einem Molgewicht von 300 bis 10 000.

Als anorganisches Lösemittel wird bevorzugt Wasser verwendet.

Die Realisierung einer Konzeption, welche es erlaubt Beschichtungsstoffe herzustellen, deren Haltbarkeit in der Außenanwendung die herkömmlichen um ein mehrfaches übersteigt, ist durch den Einsatz von Polymeren mit optimierter dreidimensionaler Kohlenstoff-Kohlenstoff-Bindung gelungen und Gegenstand dieser Erfindung.

Als Polymerbasis dienen bevorzugt Polymerkörper auf Basis UV-vernetzbarer aliphatischer Polyurethanacrylate mit einem hohen Doppelbindungsumsatz die bei der UV-Bestrahlung einen Vernetzungsgrad von über 80 % unter Mitwirkung von Photoinitiatoren erzielen.

Zu den geeigneten Photoinitiatoren oder Gemischen von Photoinitiatoren zählen solche aus der Gruppe bestehend aus 2-Hydroxyketon und / oder BAPO und 2-Hydroxyketon oder BAPO & Blends. Die verwendete Menge an Photoinitiator in den erfindungsgemäßen Beschichtungsstoffen liegt im Bereich von 0,1 bis 9 Gew.% bezogen auf die Gesamtmenge an eingesetzten Stoffen und bevorzugt in einem Bereich von 1,0 bis 5 Gew.% .

Bei Verwendung von optimierten Polymerstrukturen der oben beschriebenen Art erzielt man eine ausgeprägte Untergrundhaftung und eine langzeit stabile Elastizität. Blockfestigkeit, natürliche UV-Lichtabsorption und mechanische Widerstandsfähigkeit lassen sich sehr gut steuern. Man erzielt positive Eigenschaften der Beschichtungsstoffe sowohl während der Herstellung, der Verarbeitung, dem Gebrauch als auch bei der Entsorgung.

Es zeigte sich überraschenderweise, daß die erfindungsgemäßen Beschichtungsmischungen bereits bei Temperaturen von unter 60 °C einen Doppelbindungsumsatz von mindestens 75 % erreichten.

Auch zeigen die erfindungsgemäßen Verbindungen eine extreme Dauerelastizität bei gleichzeitiger geringster Klebrigkeit der Lackfläche, auch nach bzw. unter lang andauernden exogenen Einflüssen, insbesondere bei einer Wetterbeanspruchung von mindestens 5 Jahren.

Ein weiterer Erfindungsgegenstand ist die Anreicherung der erfindungsgemäßen Beschichtungsstoffe mit Bioziden, so daß diese Lackfilme gleichzeitig einen deutlichen Schutz des darunter befindlichen Holzes gegenüber holzverfärbenden Pilzen (Bläuepilz) aufwiesen; und ein Synergismus mit den chemisch-biologischen Stoffen, wie Propiconazole, IPBC, Tebuconazol als auch mit deren Stoffgemischen gegeben ist. Überraschenderweise kann die Einsatzrate von chemisch-biologischen Stoffen oder daraus hergestellten entsprechenden Gemischen um ca. 50 % reduziert werden. Die erfmdungsgemäßen Gemische zeigten eine gut steuerbare Eindringtiefe ins Holz. Diese lag bei über 1,5 mm. Zusätzlich weisen die erfindungsgemäßen Gemische eine ausgesprochen unerwartet starke Adhäsion zum Holz auf (xylophile Strukturausbildung bei den Polymeren), die über Jahre sehr hoch blieb, so daß eine wesentliche Verbesserung der Beständigkeit gegenüber Wettereinflüssen beobachtet wird.

Erfindungsgemäß kann eine zusätzliche Erhöhung des Schutzes vor der UV-Strahlung des Sonnenlichtes durch den Zusatz von 0,1 Gew.% bis 3 Gew.%, bevorzugt von 0,1Gew. % bis 1,0 Gew.% und besonders bevorzugt 0,1 Gew.% bis 0,7 Gew.% an Nanometalloxiden erzielt. Als Nanometalloxide werden solche aus der Gruppe von Titandioxid, Ceriumoxid, Siliciumdioxid oder andere verwendet. Die Partikelgröße beträgt 5 bis 400nm und bevorzugt 5 bis 50 nm. Partikel dieser Größe bewirken den Aufbau eines UV-undurchlässigen Filters im Polymerfilmgefüge. Die erfindungsgemäßen Beschichtungsstoffe mit dem Anteil an Nanometalloxiden absorbieren die UV-Strahlung zu 98 % in einem Wellenbereich von 200 bis 400 nm, der über viele Jahre den Holzbestandteil Lignin vor dem Abbau schützt. Dies steht auch im Gegensatz zum Stand der Technik bei dem in handelsüblichen lasierenden und transparenten Anstrichen ein unzureichender UV und Lichtschutz gegeben ist, und der Holzbestandteil Lignin photolytisch abgebaut wird.

In einer weiteren Ausführungsform der vorliegenden Erfindungen können Lichtschutzmittel einzeln oder in Kombination mit weiteren durch direkte Polymeraddition eingebaut werden. So zeigt eine Kombination von zwei oder mehr Lichtschutzmitteln, bei einem gleichen Verhältnis der Lichtschutzkomponenten zueinander und einem Anteil von 2 Gew.% an der Gesamtmischung, einen guten Schutz.

Dauerhaftigkeit im Wetter von mindestens. 8 - 10 Jahren in pigmentierter als auch unpigmentierter Zubereitung sind erreichbar.

Diese Effekte wurden bisher bei einem Beschichtungsstoff in einer derart vereinten Form von Eigenschaften noch nicht festgestellt. Daher ist hier die alleinige Anwendung dieser erfindungsgemäßen Beschichtungsstoffe als Schutzmantel für den darunter befindlichen Untergrund völlig ausreichend. Der derzeitige Stand der Technik besteht im Aufbringen von drei bis vier Lackschichten, worin je einmal Imprägnierung und Grundierung erfolgt und ein bis zweimal die Endlackierung aufgetragen wird um einen ausreichenden, von 1 - 4 Jahren andauernden, Oberflächenschutz zu erreichen

Die im Rahmen der vorliegenden Erfindung aufzutragenden Schichten, liegen im Bereich von nur zwei Lackschichten mit den erfindungsgemäßen Beschichtungsstoffen um einen dauerhaften Langzeitoberflächenschutz über viele Jahre, mindestens jedoch über 8-10 Jahre zu erreichen.
Ein weiterer Gegenstand der vorliegenden Erfindung ist es gewesen ein Verfahren zur Herstellung der lösemittelhaltigen UV-strahlenhärtenden Beschichtungsstoffe zur Verfügung zu stellen.

In einer Ausführungsform des erfindungsgemäßen Verfahrens zur Herstellung von lösemittellialtigen UV-strahlenhärtende Beschichtungsstoff werden in einem Mischer, in dem mindestens ein UV-vernetzbares aliphatisches Polymer oder Copolymerisat oder Mischungen davon mit einem Anteil von 20 bis 40 Gew.%, gegebenenfalls Füllstoffe mit einem Anteil von 15 bis 40 Gew.% Photoinitiatoren mit einem Anteil von 0,1 bis 9 Gew.%, weitere Hilfsstoffe mit einem Anteil von 3 bis 10 Gew.%, gegebenenfalls 0,1 bis 15 Gew.% an chemisch-biologisch aktiven Substanzen und/oder Nanometalloxiden und einem organischen oder anorganischem Lösemittel vermischt und dispergiert.

Ein weiterer Gegenstand der vorliegenden Erfindung ist die Verwendung des lösemittelhaltigen UV-strahlenhärtenden Beschichtungsstoffes als Beschichtungsmaterial für Holzflächen im Außen- und Innenbereich.

### Beispiele

Die nachfolgenden Beispiele sollen die vorliegende Erfindung näher erläutern ohne sie jedoch einzuschränken. Bei den in den Beispielen genannten Komponenten handelt es sich um handelsübliche Komponenten, die von unterschiedlichen Herstellern bezogen werden können.

Gemäß dem erfindungsgemäßen Verfahren wird bei einer Arbeits- bzw. Verfahrenstemperatur von 278 K- 308 K, vorzugsweise 280 K - 303 K, in einem schnelllaufenden Mischaggregat, vorzugsweise Schnellrührer, Dissolver oder einem Dispergator das wasserlösliche organischchemische, schnellflüchtige Lösungsmittel oder Lösungsmittelgemisch, einschließlich der darin gelösten oder löslichen Bestandteile oder ein oder mehrere Bestandteile der öligen Phase oder den Bestandteilen der wäßrigen Phase vermischt und homogen verteilt.

Die Durchmischung wird mit einer derartigen Geschwindigkeit (unter Berücksichtigung des jeweiligen Abstandes des Rührwerkes von der Kesselwand, dem Radius des Rührers und dgl.) und so lange durchgeführt, bis die Verteilung der emuligierten Harzteilchen einen mittleren Durchmesser im Bereich von 0.1 - 15 µm, vorzugsweise 0.5 - 4 µm erreicht hat. Nach einer bevorzugten Ausführungsform wird die Durchmischung mit einer Rand und/ oder Umfangsgeschwindigkeit von 10 - 30 m/sec, vorzugsweise 12 - 20 m/sec durchgeführt. Das Wasser wird mit einer Zuführungsgeschwindigkeit von 10 - 250 1/min, vorzugsweise 70 - 130 1/min eingeleitet. Der Durchmesser der Scheibe oder des Rührers beträgt zweckmäßig ¼ d bis ¾ d (d - Durchmesser des Mischbehälters bzw. Kessels), vorzugsweise 0.3 - 0.4 d. Die Arbeitstemperatur der beiden flüssigen Phasen soll vorzugsweise T = 280 K bis T = 303 K betragen. In diesem Temperaturbereich lassen sich innerhalb von 15 Minuten nach Beendigung der Wasserzufuhr Dispersionsfeinheiten im Bereich von 1 - 3 µm erreichen.

### Vergleichsbeispiel 1

### Bestandteile einer pigmentierten Variation:

| | | |
|---|---|---|
| UV-vernetzbares aliphatisches Urethanacrylat | | 23,00 Gew.% |
| Titandioxid | | 21,05 Gew.% |
| 2-(2-Ethoxyethoxy)ethanol | | 1,10 Gew.% |
| 2-(2-Butoxyethoxy)ethanol | | 0,70 Gew.% |
| Polyethermodifiziertes Dimethylpolysiloxan-Copolymer | | 1,00 Gew.% |
| Wasserlösliches Polyurethan (Borchigel L-71 oder Coatex BR-100) | | 1,05 Gew.% |
| Photoinitiator (Gemisch 1:1:1;CGL-1189 :Tinuvinl 130:Darocur 4265) | | 1,20 Gew.% |
| oder Darocur 4265 | | 0,50 Gew.% |
| oder Esacure KIP 100F | | 0,20 Gew.% |
| Wasser | add 100 | |

### Vergleichsbeispiel 1A

### Bestandteile einer unpigmentierten Variation:

| | | |
|---|---|---|
| UV-vernetzbares aliphatisches Urethanacrylat | | 29,30 Gew.% |
| 2-(2-Ethoxyethoxy)ethanol | | 2,10 Gew.% |
| Polyethermodifiziertes Dimethylpolysiloxan-Copolymer | | 1,10 Gew.% |
| Wasserlösliches Polyurethan | | 1,10 Gew.% |
| Photoinitiator (Gemisch 1:1:1;CGL-1189 :Tinuvin 1130:Darocur 4265) | | 1,20 Gew.% |
| oder Darocur 4265 | | 0,50 Gew.% |
| oder Esacure KIP 100F | | 0,20 Gew.% |
| Wasser | add 100 | |

### Vergleichsbeispiel 2

### Bestandteile einer pigmentierten Variation:

| | | |
|---|---|---|
| UV-vernetzbares aliphatisches Polyester-Polyurethan-Copolymerisat | | 23,80 Gew.% |
| Titandioxid | | 21,00 Gew.% |
| 2-(2-Ethoxyethoxy)ethanol | | 1,10 Gew.% |
| 2-(2-Butoxyethoxy)ethanol | | 0,70 Gew.% |
| Polyethermodifiziertes Dimethylpolysiloxan-Copolymer | | 1.00 Gew.% |
| Wasserlösliches Polyurethan | | 1,10 Gew.% |
| Photoinitiator (Gemisch 1:1:1;CGL-1189 :Tinnvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Vergleichsbeispiel 2A

### Bestandteile einer farblosen Variation:

| | | |
|---|---|---|
| UV-vernetzbares aliphatisches Polyester-Polyurethan-Copolymerisat | | 28,60 Gew.% |
| 2-(2-Ethoxyethoxy)ethanol | | 1,00 Gew.% |
| 2-(2-Butoxyethoxy)ethanol | | 0,80 Gew.% |
| Polyethermodifiziertes Dimethylpolysiloxan-Copolymer | | 1,00 Gew.% |
| Wasserlösliches Polyurethan | | 1,00 Gew.% |
| Photoinitiator (Gemisch 1:1:1;CGL-1189 :Tinnvin1130;Darocur 4265) | | 3,00 Gew.% |
| oder Darocur 4265 | | 3,00 Gew.% |
| oder Esacure KIP 100F | | 1,50 Gew.% |
| Wasser | add 100 | |

### Vergleichsbeispiel 2B

Bestandteile einer farblosen Variation, bestehend aus einem Gemisch eines aliphatischen Polyester-Polyurethan-Copolymerisates mit einem vernetzbaren aliphatischen Polyurethan-Acrylsäureester-Copolymerisat im Verhältnis 1:2:

| | | |
|---|---|---|
| UV-vernetzbares aliphatisches Polyester-Polyurethan-Copolymerisat | | 8,00 Gew.% |
| UV-vernetzbares aliphatisches Polyurethan-Acrylsäureester-Copolymerisat | | 16,00 Gew.% |
| 2-(2-Ethoxyethoxy)ethanol | | 0,80 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 0,90 Gew.% |
| Photoinitiator (Gemisch 1:1:1;CGL-1189 :Tinuvin1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Vergleichsbeispiel 2C

### Entsprechend Beispiel 2B, jedoch pigmentiert:

| | | |
|---|---|---|
| UV-vernetzbares aliphatisches Polyester-Polyurethan-Copolymerisat | | 8,00 Gew.% |
| UV-vernetzbares aliphatisches Polyurethan-Acrylsäureester-Copolymerisat | | 16,00 Gew.% |
| Titandioxid | | 21,00 Gew.% |
| 2-(2-Ethoxyethoxy)ethanol | | 0,80 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 0,90 Gew.% |
| Photoinitiator (Gemisch 1:1:1 ;CGL-1189 :Tinuvin1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Vergleichsbeispiel 3

### farblose Variante.

| | | |
|---|---|---|
| UV-vernetzbares aliphatisches Polyester-Polyurethan-Copolymerisat | | 28,60 Gew.% |
| 2-(2-Ethoxyethoxy)ethanol | | 1,00 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 1,00 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Beispiel 4.

### Farblose Variante:

| | |
|---|---|
| UV-vernetzbares cycloaliphatisches Epoxyacrylat | 60,00 - 80,00 Gew.% |
| Tripropyl Glycol Diacrylat (TPGDA) | 16,00 - 36,00 Gew.% |
| Photoinitiator Irgacure 500 | 4,00 Gew.% |
| oder Irgacure 164 und Benzophenon im Verhältnis 3:1 | 4,00 Gew.% |

### Vergleichsbeispiel 4.A

### Definiertes Beispiel.

| | |
|---|---|
| UV-vernetzbares cycloaliphatisches Epoxyacrylat | 80,00 Gew.% |
| Tripropyl Glycol Diacrylat (TPGDA) | 16,00 Gew.% |
| Photoinitiator Irgacure 500 | 4,00 Gew.% |
| oder Irgacure 164 und Benzophenon im Verhältnis 3:1 | 4,00 Gew.% |

Beispiele für den Zusatz von Nanometalloxiden. Hierbei werden wahlweise 0,6 % Nanometälloxid aus der Gruppe bestehend aus Nanotitandioxid, oder Ceriumoxid oder Siliciumdioxid verwendet.

### Beispiel 1

### Bestandteile einer pigmentierten Variation und dem Zusatz von Nanometalloxiden:

| | | |
|---|---|---|
| UV-vernetzbares aliphatisches Urethanacrylat | | 23,00 Gew.% |
| Titandioxid | | 21,05 Gew.% |
| 2-(2-Ethoxyethoxy)ethanol | | 1,10 Gew.% |
| 2-(2-Butoxyethoxy)ethanol | | 0,70 Gew.% |
| Polyethermodifiziertes Dimethylpolysiloxan-Copolymer | | 1,00 Gew.% |
| Wasserlösliches Polyurethan | | 1,05 Gew.% |
| Nanometalloxid(Nanotitandioxid oder Ceriumoxid oder Siliciumdioxid) | | 0,60 Gew.% |
| Photoinitiator (Gemisch 1:1:1;CGL-1189 :Tinuvin 1130:Darocur 4265) | | 1,20 Gew.% |
| oder Darocur 4265 | | 0,50 Gew.% |
| oder Esacure KIP 100F | | 0,20 Gew.% |
| Wasser | add 100 | |

### Beispiel 1A

### Bestandteile einer unpigmentierten Variation und dem Zusatz von Nanometalloxiden:

| | | |
|---|---|---|
| UV-vernetzbares aliphatisches Urethanacrylat | | 29,30 Gew.% |
| 2-(2-Ethoxyethoxy)ethanol | | 2,10 Gew.% |
| Polyethermodifiziertes Dimethylpolysiloxan-Copolymer | | 1,10 Gew.% |
| Wasserlösliches Polyurethan | | 1,10 Gew.% |
| Nanometalloxid(Nanotitandioxid oder Ceriumoxid oder Siliciumdioxid) | | 0,60 Gew.% |
| Photoinitiator (Gemisch 1:1:1;CGL-1189 :Tinuvin 1130:Darocur 4265) | | 1,20 Gew.% |
| oder Darocur 4265 | | 0,50 Gew.% |
| oder Esacure KIP 100F | | 0,20 Gew.% |
| Wasser | add 100 | |

### Beispiel 2

### Bestandteile einer pigmentierten Variation und dem Zusatz von Nanometalloxiden:

| | | |
|---|---|---|
| UV-vernetzbares aliphatisches Polyester-Polurethan-Copolymerisat | | 23,80 Gew.% |
| Titandioxid | | 21,00 Gew.% |
| 2-(2-Ethoxyethoxy)ethanol | | 1,10 Gew.% |
| 2-(2-Butoxyethoxy)ethanol | | 0,70 Gew.% |
| Polyethermodifiziertes Dimethylpolysiloxan-Copolymer | | 1,00 Gew.% |
| Wasserlösliches Polyurethan | | 1,10 Gew.% |
| Nanometalloxid (Nanotitandioxid oder Ceriumoxid oder Siliciumdioxid) | | 0,60 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Beispiel 2A

### Bestandteile einer farblosen Variation und dem Zusatz von Nanometalloxiden:

| | | |
|---|---|---|
| UV-vernetzbares aliphatisches Polyester-Polyurethan-Copolymerisat | | 28,60 Gew.% |
| 2-(2-Ethoxyethoxy)ethanol | | 1,00 Gew.% |
| 2-(2-Butoxyethoxy)ethanol | | 0,80 Gew.% |
| Polyethermodifiziertes Dimethylpolysiloxan-Copolymer | | 1,00 Gew.% |
| Wasserlösliches Polyurethan | | 1,00 Gew.% |
| Nanometalloxid(Nanotitandioxid oder Ceriumoxid oder Siliciumdioxid) | | 0,60 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Beispiel 2B

Bestandteile einer farblosen Variation, bestehend aus einem Gemisch eines aliphatischen Polyester-Polyurethan-Copolymerisates mit einem vernetzbaren aliphatischen Polyurethan-Acrylsäureester-Copolymerisat im Verhältnis 1:2 und den Nanometalloxiden.

| | | |
|---|---|---|
| UV-vernetzbares aliphatisches Polyester-Polyurethan-Copolymerisat | | 8,00 Gew.% |
| UV-vernetzbares aliphatisches-Polyurethan-Acrylsäureester-Copolymerisat | | 16,00 Gew.% |
| 2-(2-Ethoxyethoxy)ethanol | | 0,80 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 0,90 Gew.% |
| Nanometalloxid(Nanotitandioxid oder Ceriumoxid oder Siliciumdioxid) | | 0,60 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Beispiel 2C

### Entsprechend Beispiel 6B, jedoch pigmentiert und dem Zusatz von Nanometalloxiden:

| | | |
|---|---|---|
| UV-vernetzbares aliphatisches Polyester-Polyurethan-Copolymerisat | | 8,00 Gew.% |
| UV-vernetzbares aliphatisches Polyurethan-Acrylsäureester-Copolymerisat | | 16,00 Gew.% |
| Titandioxid | | 21,00 Gew.% |
| 2-(2-Ethoxyethoxy)ethanol | | 0,80 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 0,90 Gew.% |
| Nanometalloxid(Nanotitandioxid oder Ceriumoxid oder Siliciumdioxid) | | 0,60 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Beispiel 3

### farblose Variante mit dem Zusatz von Nanometalloxiden:

| | | |
|---|---|---|
| UV-vernetzbares aliphatisches Polyester-Polyurethan-Copolymerisat | | 28,60 Gew. |
| 2-(2-Ethoxyethoxy)ethanol | | 1,00 Gew.% |
| 2-(2-Butoxyethoxy)ethanol | | 0,80 Gew.% |
| Polyethermodifiziertes Dimethylpolysiloxan-Copolymer | | 1,10 Gew.% |
| Nanometalloxid(Nanotitandioxid oder Ceriumoxid oder Siliciumdioxid) | | 0,60 Gew.% |
| Wasserlösliches Polyurethan | | 1,00 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| Wasser | add 100 | |

### Beispiel 4

### farblose Variante mit dem Zusatz von Nanometalloxiden:

| | |
|---|---|
| UV-vernetzbares cycloaliphatisches Epoxyacrylat | 60,00 - 80,00 Gew.% |
| Tripropyl Glycol Diacrylat (TPGDA) | 16,00 - 36,00 Gew.% |
| Nanometalloxid(Nanotitandioxid oder Ceriumoxid oder Siliciumdioxid) | 0,60 Gew.% |
| Photoinitiator Irgacure 500 | 3,40 Gew.% |
| oder Irgacure 164 und Benzophenon im Verhältnis 3:1 | 3,40 Gew.% |

### Beispiel 4A

### Definiertes Beispiel mit dem Zusatz von Nanometalloxiden

| | |
|---|---|
| UV-vernetzbares cycloaliphatisches Epoxyacrylat | 80,00 Gew.% |
| Tripropyl Glycol Diacrylat (TPGDA) | 16,00 Gew.% |
| Nanometalloxid(Nanotitandioxid oder Ceriumoxid oder Siliciumdioxid) | 0,60 Gew.% |
| Photoinitiator Irgacure 500 | 3,40 Gew.% |
| oder Irgacure 164 und Benzophenon im Verhältnis 3:1 | 3,40 Gew.% |

Beispiele für den Zusatz von einem Biozid mit einem Gehalt von 0,6 Gew.% bezogen auf die Gesamtzusammensetzung bestehend aus 0,25 Gew.% IPBC und 0,35 Gew.% Propiconazol. Wird bei allen farblosen Rezepturvarianten verwendet, um einen Schutz gegenüber holzverfärbenden und holzzerstörenden Pilzen zu gewährleisten Der Schutz entspricht der Norm EN 152.1. Hierbei wird ein vorbeugender Schutz gegenüber holzverfärbenden Pilzen erreicht (Bläuepilze).

### Vergleichsbeispiel 5

### Bestandteile einer unpigmentierten Variation mit dem Zusatz von Bioziden:

| | | |
|---|---|---|
| UV-vernetzbares aliphatisches Urethanacrylat | | 29,30 Gew.% |
| 2-(2-Ethoxyethoxy)ethanol | | 2,10 Gew.% |
| Polyethermodifiziertes Dimethylpolysiloxan-Copolymer | | 1,10 Gew.% |
| Wasserlösliches Polyurethan | | 1,10 Gew.% |
| Photoinitiator (Gemisch 1:1:1;CGL-1189 :Tinuvin 1130:Darocur 4265) | | 1,20 Gew.% |
| oder Darocur 4265 | | 0,50 Gew.% |
| oder Esacure KIP 100F | | 0,20 Gew.% |
| 0,25 Gew.% IPBC und 0,35 Gew.% Propiconazol | | 0,60 Gew.% |
| Wasser | add 100 | |

### Vergleichsbeispiel 6

### Bestandteile einer farblosen Variation mit dem Zusatz von Bioziden:

| | | |
|---|---|---|
| UV-vernetzbares aliphatisches Polester-Polyurethan-Copolymerisat | | 28,60 Gew.% |
| 2-(2-Ethoxyethoxy)ethanol | | 1,00 Gew.% |
| 2-(2-Butoxyethoxy)ethanol | | 0,80 Gew.% |
| Polyethermodifiziertes Dimethylpolysiloxan-Copolymer | | 1,00 Gew.% |
| Wasserlösliches Polyurethan | | 1,00 Gew.% |
| Photoinitiator (Gemisch 1:1:1;CGL-1189 :Tinuvin1130:Darocur 4265) | | 3,00 Gew.% |
| oder Darocur 4265 | | 3,00 Gew.% |
| oder Esacure KIP 100F | | 1,50 Gew.% |
| 0,25 Gew.% IPBC und 0,35 Gew.% Propiconazol | | 0,60 Gew.% |
| Wasser | add 100 | |

### Vergleichsbeispiel 6A

Bestandteile einer farblosen Variation, bestehend aus einem Gemisch eines aliphatischen Polyester-Polyurethan-Copolymerisates mit einem vernetzbaren aliphatischen Polyurethan-Acrylsäureester-Copolymerisat im Verhältnis 1:2 und mit dem Zusatz von Bioziden.

| | | |
|---|---|---|
| UV-vernetzbares aliphatisches Polyester-Polyurethan-Copolymerisat | | 8,00 Gew.% |
| UV-vernetzbares aliphatisches Polyurethan-Acrylsäureester-Copolymerisat | | 16,00 Gew.% |
| 2-(2-Ethoxyethoxy)ethanol | | 0,80 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 0,90 Gew.% |
| Photoinitiator (Gemisch 1:1:1;CGL-1189:Tinuvin 1130:Darocur 4265) | | 3,00 Gew.% |
| oder Darocur 4265 | | 3,00 Gew.% |
| oder Esacure KIP 100F | | 1,50 Gew.% |
| 0,25 Gew.% IPBC und 0,35 Gew.% Propiconazol | | 0,60 Gew.% |
| Wasser | add 100 | |

### Vergleichsbeispiel 7

### farblose Variante mit dem Zusatz von Bioziden:

| | | |
|---|---|---|
| UV-vernetzbares aliphatisches Polyester-Polyurethan-Copolymerisat | | 28,60 Gew.% |
| 2-(2-Ethoxyethoxy)ethanol | | 1,00 Gew.% |
| 2-(2-Butoxyethoxy)ethanol | | 0,80 Gew.% |
| Polyethermodifiziertes Dimethylpolysiloxan-Copolymer | | 1,10 Gew.% |
| Wasserlösliches Polyurethan | | 1,00 Gew.% |
| Photoinitiator (Gemisch 1:1:1;CGL-1189 :Tinuvin 1130:Darocur 4265) | | 3,00 Gew.% |
| oder Darocur 4265 | | 3,00 Gew.% |
| oder Esacure KIP 100F | | 1,50 Gew.% |
| 0,25 Gew.% IPBC und 0,35 Gew.% Propiconazol | | 0,60 Gew.% |
| Wasser | add 100 | |

### Vergleichsbeispiel 8

### Farblose Variante mit dem Zusatz von Bioziden:

| | |
|---|---|
| UV-vernetzbares cycloaliphatisches Epoxyacrylat | 60,00 - 80,00 Gew.% |
| Tripropyl Glycol Diacrylat (TPGDA) | 16,00 - 36,00 Gew.% |
| Photoinitiator Irgacure 500 | 3,40 Gew.% |
| oder Irgacure 164 und Benzophenon im Verhältnis 3:1 | 3,40 Gew.% |
| 0,25 Gew.% IPBC und 0,35 Gew.% Propiconazol | 0,60 Gew.% |

### Vergleichsbeispiel 8a

### (definiertes Beispiel) mit dem Zusatz von Bioziden:

| | |
|---|---|
| UV-vernetzbares cycloaliphatisches Epoxyacrylat | 80,00 Gew.% |
| Tripropyl Glycol Diacrylat (TPGDA) | 16,00 Gew.% |
| Photoinitiator Irgacure 500 | 3,40 Gew. % |
| oder Irgacure 164 und Benzophenon im Verhältnis 3:1 | 3,40 Gew. % |
| 0,25 Gew.% IPBC und 0,35 Gew.% Propiconazol | 0,60 Gew.% |

## Patentansprüche

1. Lösemittelhaltiger UV-strahlenhärtender Beschichtungsstoff enthaltend mindestens ein UV-vernetzbares aliphatisches Polymer oder Copolymerisat oder Mischungen davon mit einem Molgewicht von 600 bis 50 000, Füllstoffe, Photoinitiatoren, anorganische und/oder organische Lösemittel, Nanometalloxide mit einer Partikelgröße von 5 nm bis 400 nm und gegebenenfalls weitere Zusatzstoffe.

2. Lösemittelhaltiger UV-strahlenhärtender Beschichtungsstoff, gemäß Anspruch 1 **dadurch gekennzeichnet, daß** ein UV-vernetzbares aliphatisches Polymer oder Copolymerisat aus der Gruppe bestehend aus Urethanacrylaten, UV-vernetzbaren aliphatischen Polyester-Polyurethan-Copolymersiaten, cycloaliphatische Epoxyacrylate oder UV-vernetzbaren aliphatischen Polyurethan-Acrylsäureester-Copolymerisaten oder Mischungen davon, eingesetzt wird.

3. Lösemittelhaltiger UV-strahlenhärtender Beschichtungsstoff gemäß Anspruch 1, **dadurch gekennzeichnet, daß** der Beschichtungsstoff ein UV-vernetzbares aliphatisches Urethanacrylat mit ein Molgewicht von 600 bis 50 000 ist und einen Acrylat-/Urethananteil von 95 : 5 bis 50 : 50 hat.

4. Lösemittelhaltiger UV-strahlenhärtender Beschichtungsstoff gemäß Anspruch 1, **dadurch gekennzeichnet, daß** das UV-vernetzbare aliphatische Urethanacrylat, bevorzugt ein Molgewicht von 2000 bis 40 000 und einen Acrylat-/Urethananteil von 60 : 40 bis 75 : 25 hat.

5. Lösemittelhaltiger UV-strahlenhärtender Beschichtungsstoff gemäß Anspruch 1, **dadurch gekennzeichnet, daß** das UV-vernetzbare aliphatische Polyester-Polyurethan-Copolymerisat ein Molgewicht von 600 bis 50 000 und einen Polyester-/Polyurethananteil von 95 : 5 bis 50 : 50 hat.

6. Lösemittelhaltiger UV-strahlenhärtender Beschichtungsstoff gemäß Anspruch 1, **dadurch gekennzeichnet, daß** das UV-vernetzbare aliphatische Polyester-Polyurethan-Copolymerisat bevorzugt ein Molgewicht von 2000 bis 40 000 und einen Polyester-/Polyurethananteil von 95 : 5 bis 50 : 50 hat.

7. Lösemittelhaltiger UV-strahlenhärtender Beschichtungsstoff gemäß Anspruch 1, **dadurch gekennzeichnet, daß** das UV-vernetzbare aliphatische Polyester-Polyurethan-Copolymerisat bevorzugt ein Molgewicht von 2000 bis 40 000 und einem Polyester-/Polyurethananteil von 60 : 40 bis 75 : 25 und /oder aus einem Gemisch aus 1 Gewichtsteil eines UV-vernetzbaren aliphatischen Polyester-Polyurethan-Copolymerisates und 1 Gewichtsteil eines UV-vernetzbaren aliphatischen Polyurethan-Acrylsäureester-Copolymerisates besteht.

8. Lösemittelhaltiger UV-strahlenhärtender Beschichtungsstoff gemäß Anspruch 1, **dadurch gekennzeichnet, daß** der Beschichtungsstoff aus einem UV-vernetzbaren aliphatischen Polyurethan und Acrylsäureester-Copolymerisat besteht, und ein Molgewicht von 600 bis 50 000 und einen Acrylsäureester-/Polyurethananteil von 95 : 5 bis 50 : 50 hat.

9. Lösemittelhaltiger UV-strahlenhärtender Beschichtungsstoff gemäß Anspruch 1, **dadurch gekennzeichnet, daß** der Beschichtungsstoff aus einem UV-vernetzbaren aliphatischen Polyurethan und Acrylsäureester-Copolymerisat besteht, und bevorzugt ein Molgewicht von 2000 bis 40 000 und einen Acrylat-/Urethananteil von 60 : 40 bis 75 : 25 hat.

10. Lösemittelhaltiger UV-strahlenhärtender Beschichtungsstoff gemäß Anspruch 1, **dadurch gekennzeichnet, daß** der Beschichtungsstoff aus einem UV-vernetzbaren cycloaliphatischen Epoxyacrylat mit einem Molgewicht von 300 bis 20 000, einem oder mehreren Photoinitiatoren, Füllstoffen, anorganischen und/oder organischen Lösemitteln und gegebenenfalls weiteren Zusatzstoffen besteht.

11. Lösemittelhaltiger UV-strahlenhärtender Beschichtungsstoff gemäß einem der vorhergehenden Ansprüche 1 bis 10, **dadurch gekennzeichnet, daß** das anorganische Lösemittel Wasser ist.

12. Lösemittelhaltiger UV-strahlenhärtender Beschichtungsstoff gemäß einem der vorhergehenden Ansprüche 1 bis 11, **dadurch gekennzeichnet, daß** als Photoinitiatoren solche aus der Gruppe von unsubstituierten oder substituierten 2-Hydroyketonen und /oder BAPO oder Mischungen davon verwendet werden.

13. Lösemittelhaltiger UV-strahlenhärtender Beschichtungsstoff gemäß einem der vorhergehenden Ansprüche 1 bis 12, **dadurch gekennzeichnet, daß** der Photoinitiatoren in einer Menge von 0,1 bis 9 Gew.% bezogen auf die Gesamtmenge an Substanzen verwendet wird.

14. Lösemittelhaltiger UV-strahlenhärtender Beschichtungsstoff gemäß einem der vorhergehenden Ansprüche 1 bis 12, **dadurch gekennzeichnet, daß** der Photoinitiatoren bevorzugt in einer Menge von 1,0 bis 6 Gew.% bezogen auf die Gesamtmenge an Substanzen verwendet wird.

15. Lösemittelhaltiger UV-strahlenhärtender Beschichtungsstoff gemäß Anspruch 1, **dadurch gekennzeichnet, daß** als weitere Zusatzstoffe chemisch-biologisch wirksame Verbindungen hinzugemischt werden.

16. Lösemittelhaltiger UV-strahlenhärtender Beschichtungsstoff gemäß Anspruch 13, **dadurch gekennzeichnet, daß** die chemisch-biologisch wirksamen Verbindungen Biozide aus der Gruppe bestehend aus Propiconazole, IPBC, Tebuconazol oder Mischungen dieser, sind.

17. Lösemittelhaltiger UV-strahlenhärtender Beschichtungsstoff gemäß Anspruch 1, **dadurch gekennzeichnet, daß** Nanometalloxide solche aus der Gruppe aus Titandioxid, Ceriumoxid oder Siliciumdioxid verwendet werden.

18. Lösemittelhaltiger UV-strahlenhärtender Beschichtungsstoff gemäß Anspruch 1, **dadurch gekennzeichnet, daß** Nanometalloxide in einer Menge von 0,1 Gew.% bis 3 Gew.%, bevorzugt von 0,1Gew. % bis 1,0 Gew.% und besonders bevorzugt 0,1 Gew.% bis 0,7 Gew.% verwendet werden.

19. Lösemittelhaltiger UV-strahlenhärtender Beschichtungsstoff gemäß Anspruch 1, **dadurch gekennzeichnet, daß** Nanometalloxide mit einer Partikelgröße von 5 nm bis 60 nm verwendet werden.

20. Lösemittelhaltiger UV-strahlenhärtende Beschichtungsstoff gemäß Anspruch 1, **dadurch gekennzeichnet, daß** Nanometalloxide bevorzugt mit einer Partikelgröße von 5 nm bis 100 nm verwendet werden.

21. Verfahren zur Herstellung von lösemittelhaltigen UV-strahlenhärtenden Beschichtungsstoffen gemäß Anspruch 1, **dadurch gekennzeichnet, daß** mindestens ein UV-vernetzbares aliphatisches Polymer oder Copolymerisat oder Mischungen davon mit einem Anteil von 20 bis 40 Gew.%, gegebenenfalls Füllstoffe mit einem Anteil von 15 bis 40 Gew.% Photoinitiatoren mit einem Anteil von 0,1 bis 9 Gew.%, weitere Hilfsstoffe mit einem Anteil von 3 bis 10 Gew.%, gegebenenfalls 0,1 bis 15 Gew.% an chemisch-biologisch aktiven Substanzen und/oder Nanometalloxiden und einem organischen oder anorganischem Lösemittel vermischt und dispergiert werden.

22. Verwendung der lösemittelhaltigen UV-strahlenhärtenden Beschichtungsstoffe gemäß einem der vorhergehenden Ansprüche 1 bis 21 als Beschichtungsmaterialien für Holzflächen im Außen- oder Innenbereich.

## Claims

1. A solvent-containing UV-curable coating material containing at least one UV-crosslinkable, aliphatic polymer or copolymerisate or mixtures thereof with a molar weight of 600 to 50,000, fillers, photoinitiators, inorganic and/or organic solvent, nano-sized metal oxides with a particle size of 5 nm to 400 nm and optionally further additives.

2. A solvent-containing UV-curable coating material as claimed in Claim 1, **characterised in that** a UV-crosslinkable aliphatic polymer or copolymerisate is used from the group consisting of urethane acrylates, UV-crosslinkable aliphatic polyester-polyurethane copolymerisates, cycloaliphatic epoxyacrylates or UV-crosslinkable aliphatic polyurethane-acrylic acid ester copolymerisates or mixtures thereof.

3. A solvent-containing UV-curable coating material as claimed in Claim 1, **characterised in that** the coating material is a UV-crosslinkable aliphatic urethane acrylate with a molar weight of 600 to 50,000 and has an acrylate/urethane content of 95:5 to 50:50.

4. A solvent-containing UV-curable coating material as claimed in Claim 1, **characterised in that** the UV-crosslinkable aliphatic urethane acrylate preferably has a molar weight of 2,000 to 40,000 and an acrylate/urethane content of 60:40 to 75:25.

5. A solvent-containing UV-curable coating material as claimed in Claim 1, **characterised in that** the UV-crosslinkable aliphatic polyester-polyurethane copolymerisate has a molar weight of 600 to 50,000 and a polyester/polyurethane content of 95:5 to 50:50.

6. A solvent-containing UV-curable coating material as claimed in Claim 1, **characterised in that** the UV-crosslinkable aliphatic polyester-polyurethane copolymerisate preferably has a molar weight of 2,000 to 40,000 and a polyester/polyurethane content of 95:5 to 50:50.

7. A solvent-containing UV-curable coating material as claimed in Claim 1, **characterised in that** the UV-crosslinkable aliphatic polyester-polyurethane copolymerisate preferably has a molar weight of 2,000 to 40,000 and a polyester/polyurethane content of 60:40 to 75:25 and/or consists of a mixture of 1 part by weight of a UV-crosslinkable aliphatic polyester-polyurethane copolymerisate and 1 part by weight of a UV-crosslinkable aliphatic polyurethane-acrylic acid ester copolymerisate.

8. A solvent-containing UV-curable coating material as claimed in Claim 1, **characterised in that** the coating material consists of a UV-crosslinkable aliphatic polyurethane and acrylic acid ester copolymerisate and has a molar weight of 600 to 50,000 and an acrylic acid ester/polyurethane content of 95:5 to 50:50.

9. A solvent-containing UV-curable coating material as claimed in Claim 1, **characterised in that** the coating material consists of a UV-crosslinkable aliphatic polyurethane and acrylic acid ester copolymerisate and preferably has a molar weight of 2,000 to 40,000 and an acrylate/urethane content of 60:40 to 75:25.

10. A solvent-containing UV-curable coating material as claimed in Claim 1, **characterised in that** the coating material consists of a UV-crosslinkable cycloaliphatic epoxy acrylate with a molar weight of 300 to 20,000, one or more photoinitiators, fillers, inorganic and/or organic solvents and optionally further additives.

11. A solvent-containing UV-curable coating material as claimed in one of the preceding Claims 1 to 10, **characterised in that** the inorganic solvent is water.

12. A solvent-containing UV-curable coating material as claimed in one of the preceding Claims 1 to 11, **characterised in that** photoinitiators from the group consisting of unsubstituted or substituted 2-hydroxy ketones and/or BAPO or mixtures thereof.

13. A solvent-containing UV-curable coating material as claimed in one of the preceding Claims 1 to 12, **characterised in that** the photoinitiators are used in an amount of 0.1 to 0.9% by wt. with respect to the total amount of substances.

14. A solvent-containing UV-curable coating material as claimed in one of the preceding Claims 1 to 12, **characterised in that** the photoinitiators are preferable used in an amount of 1.0 to 6% by wt. with respect to the entire amount of substances.

15. A solvent-containing UV-curable coating material as claimed in Claim 1, **characterised in that** chemically-biologically active compounds are mixed in as the further additives.

16. A solvent-containing UV-curable coating material as claimed in Claim 13, **characterised in that** the chemically-biologically active compounds are biocides from the group consisting of propiconazole, IPBC, tebuconazole or mixtures of them.

17. A solvent-containing UV-curable coating material as claimed in Claim 1, **characterised in that** nano-sized metal oxides are used from the group consisting of titanium dioxide, cerium oxide or silicon dioxide.

18. A solvent-containing UV-curable coating material as claimed in Claim 1, **characterised in that** the nano-sized metal oxides are used in an amount of 0.1% by wt. to 3% by wt., preferably 0.1% by wt. to 1.0% by wt. and particularly preferably 0.1% by wt. to 0.7% by wt.

19. A solvent-containing UV-curable coating material as claimed in Claim 1, **characterised in that** the nano-sized metal oxides are used with a particle size of 5 nm to 60 nm.

20. A solvent-containing UV-curable coating material as claimed in Claim 1, **characterised in that** the nano-sized metal oxides are preferably used with a particle size of 5 nm to 100 nm.

21. A method of manufacturing solvent-containing UV-curable coating material as claimed in Claim 1, **characterised in that** at least one UV-crosslinkable aliphatic polymer or copolymerisate or mixtures thereof in an amount of 20 to 40% by wt., optionally fillers in an amount of 15 to 40% by wt., photoinitiators in an amount of 0.1 to 9% by wt., further adjuvants in an amount of 3 to 10% by wt., optionally 0.1 to 15% by wt. of chemically-biologically active substances and/or nano-sized metal oxides an an organic or inorganic solvent are mixed and dispersed.

22. The use of the solvent-containing UV-curable coating materials as claimed in one of the preceding Claims 1 to 21 as coating materials for outdoor or indoor wood surfaces.

## Revendications

1. Substance de revêtement durcissant aux UV, laquelle substance de revêtement contient des solvants et au moins un polymère ou copolymérisat aliphatique réticulable aux UV ou des mélanges de ceux-ci, ayant un poids molaire de 600 à 50 000, des charges, des photoexcitants, des solvants minéraux et/ou organiques, des nanooxydes métalliques ayant une taille de particule de 5 nm à 400 nm et le cas échéant d'autres adjuvants.

2. Substance de revêtement durcissant aux UV et contenant des solvants selon la revendication 1, **caractérisée en ce que** l'on utilise un polymère ou copolymérisat aliphatique, réticulable aux UV, qui est choisi dans le groupe comprenant les uréthane-acrylates, les copolymérisats polyester-polyuréthane aliphatiques réticulables aux UV, les époxyacrylates cycloaliphatiques ou les copolymérisats polyuréthane-ester d'acide acrylique aliphatiques réticulables aux UV ou des mélanges de ceux-ci.

3. Substance de revêtement durcissant aux UV et contenant des solvants selon la revendication 1, **caractérisée en ce que** la substance de revêtement est un uréthane-acrylate aliphatique réticulable aux UV ayant un poids molaire de 600 à 50 000 et un rapport acrylate/uréthane de 95:5 à 50:50.

4. Substance de revêtement durcissant aux UV et contenant des solvants selon la revendication 1, **caractérisée en ce que** l'uréthane-acrylate aliphatique réticulable aux UV a de préférence un poids molaire de 2000 à 40 000 et un rapport acrylate/uréthane de 60:40 à 75:25.

5. Substance de revêtement durcissant aux UV et contenant des solvants selon la revendication 1, **caractérisée en ce que** le copolymérisat polysester-polyuréthane aliphatique réticulable aux UV a un poids molaire de 600 à 50 000 et un rapport polyester/polyuréthane de 95:5 à 50:50.

6. Substance de revêtement durcissant aux UV et contenant des solvants selon la revendication 1, **caractérisée en ce que** le copolymérisat polyester-polyuréthane aliphatique réticulable aux UV a de préférence un poids molaire de 2000 à 40 000 et un rapport polyester/polyuréthane de 95:5 à 50:50.

7. Substance de revêtement durcissant aux UV et contenant des solvants selon la revendication 1, **caractérisée en ce que** le copolymérisat polyester-polyuréthane aliphatique réticulable aux UV a de préférence un poids molaire de 2000 à 40 000 et un rapport polyester/polyuréthane de 60:40 à 75:25 et/ou est constitué d'un mélange d'une partie en poids d'un copolymérisat polyester-polyuréthane aliphatique réticulable aux UV et d'une partie en poids d'un copolymérisat polyuréthane-ester d'acide acrylique aliphatique réticulable aux UV.

8. Substance de revêtement durcissant aux UV et contenant des solvants selon la revendication 1, **caractérisée en ce que** la substance de revêtement est constituée d'un copolymérisat de polyuréthane et d'ester d'acide acrylique aliphatique réticulable aux UV, et a un poids molaire de 600 à 50 000 et un rapport ester d'acide acrylique/polyuréthane de 95:5 à 50:50.

9. Substance de revêtement durcissant aux UV et contenant des solvants selon la revendication 1, **caractérisée en ce que** la substance de revêtement est constituée d'un copolymérisat de polyuréthane et d'ester d'acide acrylique aliphatique réticulable aux UV, et a de préférence un poids molaire de 2000 à 40 000 et un rapport acrylate/polyuréthane de 60:40 à 75:25.

10. Substance de revêtement durcissant aux UV et contenant des solvants selon la revendication 1, **caractérisée en ce que** la substance de revêtement est constituée d'un époxyacrylate cycloaliphatique réticulable aux UV ayant un poids molaire de 300 à 20 000, d'un ou plusieurs photoexcitants, des charges, des solvants minéraux et/ou organiques et le cas échéant d'autres adjuvants.

11. Substance de revêtement durcissant aux UV et contenant des solvants selon l'une des revendications 1 à 10, **caractérisée en ce que** le solvant minéral est l'eau.

12. Substance de revêtement durcissant aux UV et contenant des solvants selon l'une des revendications précédentes 1 à 11, **caractérisée en ce que** les photoexcitants utilisés sont choisis dans le groupe constitué de 2-hydroxycétones substitués ou non substitués et/ou de BAPO ou de mélanges de ceux-ci.

13. Substance de revêtement durcissant aux UV et contenant des solvants selon l'une des revendications précédentes 1 à 12, **caractérisée en ce que** le photoexcitant est utilisé dans une quantité de 0,1 à 9% en poids rapportée à la quantité totale de substances.

14. Substance de revêtement durcissant aux UV et contenant des solvants selon l'une des revendications précédentes 1 à 12, **caractérisée en ce que** le photoexcitant est de préférence utilisé dans une quantité de 1,0 à 6% en poids rapportée à la quantité totale de substances.

15. Substance de revêtement durcissant aux UV et contenant des solvants selon la revendication 1, **caractérisée en ce que** l'on ajoute comme adjuvants des composés actifs du point de vue chimique et biologique.

16. Substance de revêtement durcissant aux UV et contenant des solvants selon la revendication 1, **caractérisée en ce que** les composés actifs du point de vue chimique et biologique sont choisis dans le groupe comprenant le propiconazole, l'IPBC, le tébuconazol ou des mélanges de ceux-ci.

17. Substance de revêtement durcissant aux UV et contenant des solvants selon la revendication 1, **caractérisée en ce que** les nanooxydes métalliques utilisés sont choisis dans le groupe comprenant le dioxyde de titane,l'oxyde de cérium ou l'oxyde de silicium.

18. Substance de revêtement durcissant aux UV et contenant des solvants selon la revendication 1, **caractérisée en ce que** les nanooxydes métalliques sont utilisés dans une quantité de 0,1% en poids à 3% en poids, de préférence de 0,1% en poids à 1,0% en poids et de façon particulièrement préférée de 0,1% en poids à 0,7% en poids.

19. Substance de revêtement durcissant aux UV et contenant des solvants selon la revendication 1, **caractérisée en ce que** les nanooxydes métalliques utilisés ont une taille de particule de 5 nm à 100 nm.

20. Substance de revêtement durcissant aux UV et contenant des solvants selon la revendication 1, **caractérisée en ce que** les nanooxydes métalliques utilisés ont de préférence une taille de particule de 5 nm à 100 nm.

21. Procédé de fabrication de substances de revêtement durcissant aux UV et contenant des solvants selon la revendication 1, **caractérisé en ce que** l'on réalise un mélange et une dispersion d'au moins un polymère ou copolymère aliphatique réticulable aux UV ou des mélanges de ceux-ci ayant un pourcentage en poids de 20 à 40%, le cas échéant de charges dans un pourcentage en poids de 15 à 40%, de photoexcitants dans un pourcentage en poids de 0,1 à 9% en poids, d'autres substances auxiliaires dans un pourcentage en poids de 3 à 60%, le cas échéant 0,1 à 15% en poids de substances actives du point de vue biologique et chimique et/ou de nanoxydes métalliques et d'un solvant organique ou minéral.

22. Utilisation de substances de revêtement durcissant aux UV et contenant des solvants selon la revendication 1 à 21 comme matériaux de revêtement de surfaces de bois du côté intérieur et du côté extérieur.
